Europäisches Patentamt

**European Patent Office**

Office européen des brevets

(11) Publication number : **0 474 468 A2**

# EUROPEAN PATENT APPLICATION

(21) Application number : **91308076.8**

(22) Date of filing : **04.09.91**

(51) Int. Cl.⁵ : **G03G 13/20**

(30) Priority : **04.09.90 US 577382**

(43) Date of publication of application :
**11.03.92 Bulletin 92/11**

(84) Designated Contracting States :
**DE FR GB IT**

(71) Applicant : **TEKTRONIX, INC.**
**Howard Vollum Park 14150 S.W. Karl Braun**
**Drive P.O. Box 500**
**Beaverton Oregon 97077 (US)**

(72) Inventor : **Rise, James D.**
**15987 NW Lyndel Lane**
**Beaverton, Oregon 97006 (US)**
Inventor : **Hoffman, Eldon P.**
**5521 Alder Court**
**West Linn, Oregon 97068 (US)**

(74) Representative : **Lawrence, Malcolm Graham**
**et al**
**Hepworth, Lawrence, Bryer & Bizley 2nd Floor**
**Gate House South, West Gate**
**Harlow Essex CM20 1JN (GB)**

(54) **Pressure fixing and developing apparatus.**

(57) A pressure applicator for fixing or developing images on print media is described wherein a relatively small pressure applying surface, such as the surface of a rotatable pressure wheel, engages the print media to apply pressure to the print media. The pressure applicator may be mounted for translation with the shuttling of an ink jet print head. The pressure applicator may also be passed in a multiple overlapping fashion over the print media to uniformly treat images on the media. The pressure applicator wheel may also be mounted for translation or shuttling by a mechanism operable independently of the mechanism for shuttling the ink jet print head. Single or multiple pressure applicating rollers may also be used. An arrangement of plural fixed position pressure applicating wheels is also disclosed.

EP 0 474 468 A2

The present invention relates to a pressure fixing and developing apparatus in which image containing sheet material to be treated is subjected to pressure by a roller.

It is known to pass sheet media on which an image is to be fixed or developed through a high pressure nip defined by a pair of rollers. Commonly, the journaled ends of the rollers are loaded with a force applied in a direction normal to the axis of the rollers and in a direction which biases the rollers together to form the nip. Application of a load in this manner results in bending moments in the loaded rollers. The bending moments cause the rollers to deflect or bow in the center such that there is a reduced or minimum fixing or developing pressure at the center of the nip. This deflection at the center of the rollers increases when a sheet of media is inserted in the nip. As a result, uneven fixing of toners and ink to the media occurs. Higher pressures than necessary to fix toners and ink are then required at the ends of the nip to assure adequate fixing pressure at the center of the nip.

These existing two roller systems typically require extremely high end loads. For example, assume the desired line loading along the line of contact between the rollers is to be 100 lbs. per linear inch. In this case, for a 10 inch long roller, 1,000 lbs. of force must be applied. Consequently, the structural supports for these rollers are typically relatively heavy and bulky as they must be capable of withstanding extremely high forces. In addition, these systems use rollers of a length which equals or exceeds the width of the media to be treated. Long rollers lack compactness and typically add a significant amount of weight to systems using these devices.

There are also devices in the prior art which include a pair of rollers which are skewed, that is, the longitudinal axes are supported out of parallel with one another, to compensate for the deflection of the fusing rollers. Skewing the rollers allows the ends of the rollers to wrap around each other as they deflect under load, resulting in more uniform pressure along the nip. However, skewing the rollers also results in forces which act on the media in a direction substantially perpendicular to the path the media travels. These lateral forces tend to crease or wrinkle the media during passage through the nip. Also, such an apparatus is generally limited to pressure fixing at one line loading value. For example, higher loading causes greater deflection in the rollers, which requires a greater skewing angle to avoid non-uniformity along the nip.

Other expedients have been introduced in an attempt to overcome the problem of deflection of fixing rollers upon the application of force to the ends of the rollers. Large diameter fixing rollers reduce, but do not eliminate, the deflection. However, large diameter fixing rollers add weight, cost and bulk to the apparatus. A backup roller or rollers in pressure contact with the pressure fixing and developing rollers has also been used to urge the pressure fixing rollers together along the nip. However, such backup roller systems require additional space for the backup rollers and also require additional components in comparison to a typical two-roller system.

Another method suggested in the prior art is to use a roller which is crowned at the center to compensate for the deflection due to loading. However, crowned rollers have a faster surface velocity at their center than at their ends. This differential in surface velocity contributes to wrinkling of the media and limits the versatility of these devices in handling various types of substrates.

As a more specific example of the prior art, U.S. Patent No. 4,363,862 to Giorgini discloses an apparatus for fixing toner powder images on sheet material. In Giorgini, a non-compliant pressure roller and compliant backup roller are supported with skewed longitudinal axes. The pressure roller may be of steel with an outer layer, such as of chrome, with an irregular surface comprising a plurality of randomly sized dome projections. The backup roller is described as having a sheath of a compliant material over a central core. Organic polymeric substances are mentioned as suitable for the sheath, with nylon 6/6, glass filled nylon, hard rubber and acetal resins being specifically mentioned.

U.S. Patent No. 4,768,050 to Berry discloses a pair of pressure rollers used in conjunction with the "Mead" imaging process in which photo sensitive microcapsules are ruptured by the rollers to provide the image. A roller having a hollow shell with a central shaft is shown.

U.S. Patent No. 4,356,764 to Haugan discloses a pair of rollers each with a central core and an outer hollow shell. Pressure transfer rollers support the shells on their respective cores.

The use of pressure fixing rollers for fusing or spreading hot-melt ink on print media is also known. Japanese Patent No. 18,351 to Moriguchi, et al. and U.S. Patent No. 4,745,420 to Gerstenmeier are two examples of these types of devices. Another example is U.S. Patent No.4,889,761 to Titterington, et al. owned by Tektronix, Inc. the assignee of the present application. Other examples of prior art image fixing apparatus including rollers are described in U.S. Patent Nos. 3,293,059 to Stowell, 3,566,076 to Fantuzzo and 4,568,949 to Muranaka.

Although a number of elongated roll-type pressure developing and fixing devices are known, a need exists for an improved mechanism for fixing or developing an image on sheet media, including images defined by hot-melt or phase-change ink on the media.

The present invention concerns an improved image fusing or fixing apparatus for fusing or fixing image forming material on print media. The image forming material may be any type of material for forming an image on media in which the application of pressure fixes or fuses, or develops the image on the media. Micro-capsules of image forming liquids, phase-change inks, and image forming powders are several specific examples. Thus, it has applicability to a variety of imaging products and processes, including the Mead process. In general, at least one relatively small width pressure applicator has a pressure application surface for applying pressure to print media as the print media and pressure applicator move relative to one another. The pressure applicator may take the form of one or more pressure wheels having a width of no more than about one inch.

## SUMMARY OF THE INVENTION

In accordance with another aspect of the present invention, assuming an ink jet print head of a printer is of the type which moves relative to print media during printing. A pressure applicator mount is coupled to the ink jet print head and supports a pressure applicator with a pressure application surface. The pressure applicator is supported by the mount such that the pressure application surface engages deposited ink drops on the media and applies pressure to the deposited ink drops or spots with the relative movement of the ink jet print head. Alternatively, the pressure applicator may be supported other than by the ink jet print head with a mechanism being provided to move the pressure applicator relative to the media to apply pressure to the deposited ink drops. As another approach, plural fixed location applicators may be used and arranged in an overlapping manner to collectively apply pressure to the entire sheet of printed media as the sheet is moved past the applicators.

The pressure applicator may comprise a pressure wheel rotatably mounted to a support which positions a pressure application surface of the wheel against the deposited ink drops to thereby apply pressure to such spots. In one embodiment, the pressure wheel is mounted for movement back and forth across the media in a direction skewed with respect to the direction of advancement of the media.

In one specific form of the invention, the pressure wheel has a pressure application surface of a width which is substantially less than the width of the print media. More specifically, the pressure application surface is typically no more than about one-half to one inch wide and preferably no more than about one-fourth of an inch wide. The pressure application surface may be configured to apply pressure of a greater magnitude at locations inwardly from the side margins of the pressure application surface.

As yet another aspect of the present invention, the pressure wheel may be moved relative to the print media to provide overlapping passes of the wheel over each section of the print media to be treated.

As still another aspect of the present invention, plural print wheels may be provided for applying pressure to the print media.

It is accordingly one object of the present invention to provide an improved pressure fixing or developing apparatus for applying pressure to print media, including print media on which drops of solidified hot-melt ink are present.

Another object of the present invention is to provide an apparatus which is capable of treating media of widely varying types, thicknesses and widths without wrinkling the media.

Still another object of the present invention is to provide an apparatus of this type which is capable of applying the desired pressure to the media independently of the media thickness, the width of the media and the thickness of ink on the media.

A still further object of the present invention is to provide a compact and light weight apparatus for applying pressure to print media.

Another object of the present invention is to provide an apparatus which minimizes the loading forces required to provide relatively high applied pressures to the print media.

These and other objects, features and advantages of the present invention will become apparent with reference to the following description and drawings.

## DESCRIPTION OF THE DRAWINGS

FIG. 1 is a schematic side elevational representation of an ink jet printing apparatus for jetting hot-melt or phase-change ink onto print media.

FIG. 2 is an end view, partially in section, illustrating one form of mount for a pressure applicator in accordance with the present invention.

FIG. 3 is a schematic illustration of the pressure load applied to a section of print media as relative motion occurs between a pressure applicator and the media.

FIG. 4 is a schematic elevational representation of an ink jet apparatus for jetting hot-melt or phase-change ink onto media and illustrating an alternative positioning of a pressure applicator in accordance with the present invention.

FIG. 5 is a side elevational view, partially in section, illustrating an optional media supporting surface designed to reduce the pressure applied by a pressure applicator to such surface as the pressure applicator travels toward a side edge of such substrate.

FIG. 6 is a schematic representation of the resultant pressure applied to print media from print applicators of various shapes with the media being positioned on substrates of varying configurations.

FIG. 7 illustrates an alternative form of pressure applicator including plural pressure application wheels rotatably mounted to a support.

## DETAILED DESCRIPTION OF PREFERRED EMBODIMENTS

In general, the present invention comprises an image fixing or developing apparatus in which sheet material to be treated is subjected to high pressure by a pressure applicator having a pressure application surface. The apparatus has applicability to the fixing of toner powders on media, to "Mead" process applications in which photo-sensitive micro-capsules are ruptured by passing one or more sheets containing such capsules between rollers, and to other applications in which pressure is used to fix, fuse or develop images on media. The invention has particular applicability to the fixing of images formed by hot-melt ink droplets solidified on media. In such cases, particularly in color applications, both single and multiple layers of ink are usually present simultaneously on the media. To produce a high quality image, it is desirable to apply substantially uniform pressure to areas of the media containing the multiple layers and to areas containing single layers of ink droplets. The present invention accomplishes the desired fixing of solidified phase-change ink droplets even under these circumstances. For purposes of convenience, and without limiting the broad applicability of the present invention to image fixing or developing apparatus in general, the following description is directed toward the use of the apparatus in fixing solidified hot-melt ink droplets on print media.

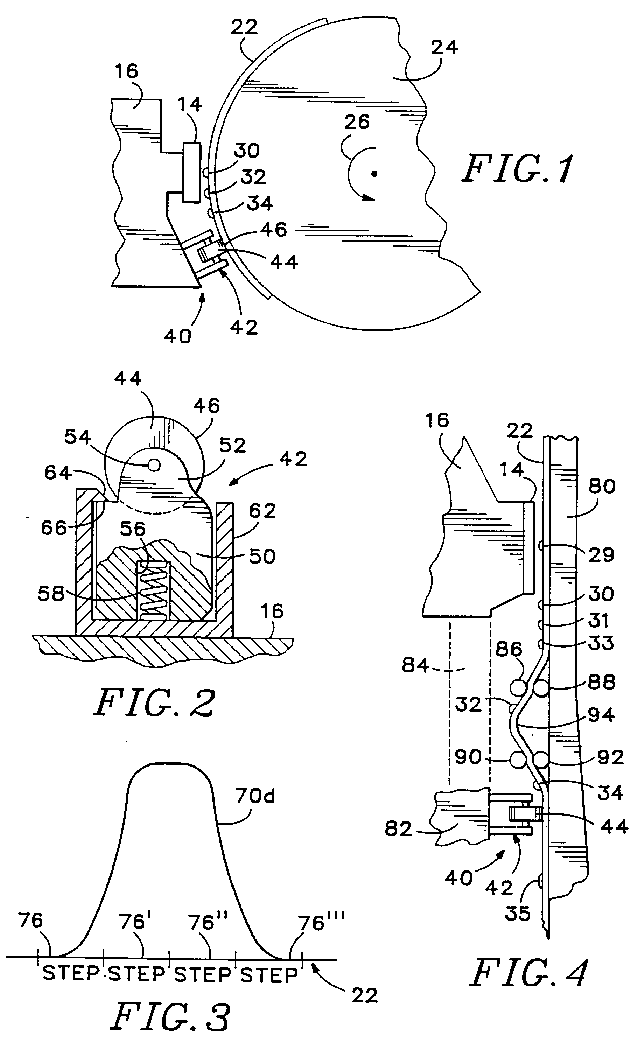

Referring to FIG. 1, a printer has an ink jet print head 14 mounted to an ink containing reservoir system 16 which supplies ink to the ink jet print head. The ink jet print head includes an ink drop ejection orifice, not shown, from which ink drops are ejected toward a sheet of ink drop receiving print media 22. In the illustrated FIG. 1 example, the media 22 is supported on a conventional media drum 24 which is rotated in the direction of an arrow 26 to advance the media in a first direction relative to the ink jet print head. In a conventional manner, the ink jet print head 14, and the reservoir 16, if directly supporting the ink jet print head, may be mounted for shuttling or reciprocating across the surface of the print media. This shuttling motion is typically in a direction skewed with respect to, and typically substantially orthogonal to, the direction of advancement of the media 22 by the drum 24.

The ink jet print head 14 may take any form and may be of the drop-on-demand type, wherein droplets are only ejected in response to the state of energization of an associated transducer. Ink jet 14 may also be of the continuous type and may optionally be provided with an air assist for accelerating the delivery of ink drops toward the media 22. One suitable ink jet print head is described in U.S. Patent No. 4,727,378 to Le, et al. In the case of hot-melt or phase-change ink, solidified ink is heated so as to be in a liquid state when ejected from the ink jet print head. Ink drops or spots 30, 32 and 34 are shown in FIG. 1 following their deposition on the target or media 22. These dots 30, 32 and 34, as well as other dots on the media, if of hot-melt ink, undergo a liquid to solid phase transition on the media. Also, the dots project somewhat from the surface of the media, the projection being exaggerated in FIG. 1. Certain types of media, such as transparencies, are not significantly penetrated by the ink drop impinging thereon. As a result, for such media the drops tend to project a greater degree from the media than in the case of other types of more porous media, such as plain paper.

In the substractive primary system of ink jet printing, secondary colors (red, green and blue) are achieved by jetting drops of two primary colors on top of one another. In the case of phase-change ink jets, this results in areas being covered with different thicknesses of ink. This area of the media should be contrasted with areas in the media containing a single layer of ink. It is desirable in any pressure fusing or fixing application that sufficient pressure be applied to the ink even though ink layers present on the media may be of different thicknesses. The present invention accomplishes this goal.

In FIG. 1, the ink containing media 22 is advanced in the direction of arrow 26 toward a pressure fusing or fixing mechanism indicated generally at 40. In general, the mechanism 40 is designed to apply pressure to ink spots on the print media to flatten and spread the ink drops. In the exemplary form of pressure application mechanism shown in FIG. 1, a support 42 is provided for rotatably carrying or mounting a pressure wheel 44. The support 42 positions the wheel 44 with an external pressure application surface 46 of the wheel 44 pressed against the print media so as to engage spots of ink on the media. In the specific form of the invention shown in FIG. 1, the support 42 is coupled to the print head supporting structure, in this case the reservoir system 16, for movement in a generally transverse direction from side-to-side of the print media as the print head and reservoir shuttle during the printing operation. Thus, the wheel 44 travels in a generally transverse direction relative to the print media and makes repeated passes across the media.

The pressure wheel 44 is typically sized to make plural overlapping passes over each section of the print media with from two to four passes being typical, depending in part upon the rate the media is moved relative to the print head to expose unprinted media for printing. In FIG. 1, the print media support, in this case the drum 24, backs up the media at the location where the media is engaged by the pressure wheel 44. The pressure wheel may also be supported to, for example, engage the print media after the print media has left the surface of the drum 24 and while the media is being backed up by a surface other than the drum surface. In addition, the wheel may alternatively be positioned to engage a back surface of the print media to press the ink spots against a back-up surface at ink containing face of the print media opposite from the face of the media which is engaged by the pressure wheel.

The pressure wheel 44 is typically quite small. For example, the wheel may have a diameter of less than three inches and typically less than one inch. In addition, the width of the wheel, and thus of the pressure application surface 46, is typically less than one inch and preferably less than one-half inch with one-quarter inch being a specific preferred example. Although a lower limit to pressure wheel width has not been established, the smaller the width the more passes required for a single pressure wheel to treat a sheet of media. Therefore, one-sixteenth to one-eighth of an inch represents lower practical limits for most applications. However, with a wheel of at least about one-fourth of an inch in width, successive passes of the wheel over deposited hot melt ink spots do not form bands on the media which tend to be more difficult to eliminate with pressure wheels of smaller widths. The pressure wheel may be of any suitable material, but it is typically of a rigid material such as stainless steel, which may be chrome plated, or a plastic material such as Delrin® from Dupont Corporation. Although not necessary, the wheel 46 is preferably of a substantially rigid material.

Assume the desired line loading is 100 lbs. per linear inch as one specific example. With a wheel having a pressure application surface which is one-fourth of an inch wide, the length of the line of contact between the wheel and print media is correspondingly one-fourth of an inch. In this case, a loading force of 25 lbs. would result in the desired line loading of 100 lbs. per linear inch. Due to the relatively low loading forces required to achieve the desired line loading, simplified and lighter weight supports 42 may be used to support the pressure applicator.

One specific form of mount for the pressure wheel 44 is shown in FIG. 2. As shown in FIG. 2, the mount 42 includes a mounting block 50 having a pair of spaced apart upright flanges, one being numbered as 52 in this Figure. The flanges define a pressure wheel receiving well therebetween within which the wheel 44 is positioned. An axle pin 54 amounts the wheel 44 to the flanges for rotation and thus also mounts the wheel to the mounting block 50. The block 50 defines a spring receiving cavity 56 within which a loading spring 58 is positioned. To adjust the load, the spring 58 may be replaced with a stronger or weaker spring. Also, a mechanism, such as a screw (not shown), may be used to adjust the length of cavity 56 to thereby adjust the spring pre-load. The block 50 and mounted wheel assembly is loosely retained within a block receiving bracket 62 which in this case, is mounted to the reservoir system 16. In the illustrated embodiment, the bracket 62 includes upright flanges at least one of which has a retainer such as a hook 64 for engaging a shoulder or shelf 66 of the block 50 to retain the block within the bracket. The walls or flanges of the bracket may be spread apart sufficiently to allow the insertion of block 50 within the bracket. Although difficult to see in FIG. 2, the height of block 50 (e.g. from shoulder or shelf 66 to the base of the block) is less than the distance from the underside of hook 64 to the base of the bracket 62. Therefore, limited sliding motion of the block 50 is permitted within the bracket 62. As a result, the pressure wheel 44 may advance toward, or retract from the drum 24 to accommodate print media of various thicknesses. The spring 58 biases the shoulder or shelf 66 of block 50 against the retainer 64.

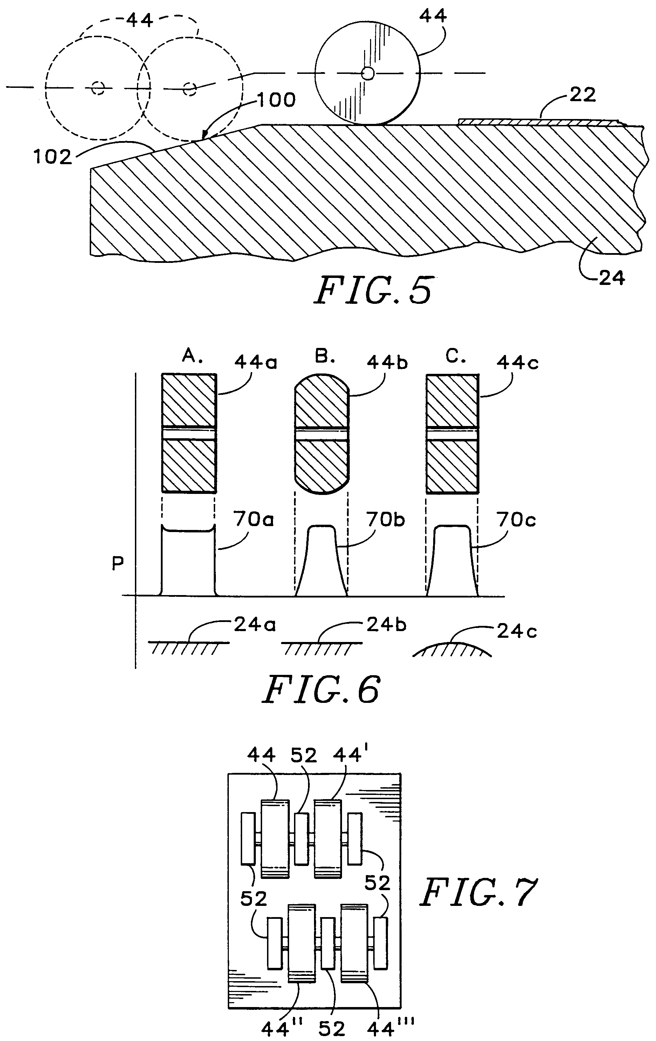

With reference to FIG. 6, representations of the line pressure P across the line of engagement between a pressure wheel and print media on a substrate are illustrated. In FIG. 6A, the pressure wheel 44A is generally rectangular in cross-section. When wheel 44A is pressed against print media on a substantially flat backing substrate 24A, the resulting line pressure distribution is shown at 70A. As can be seen in FIG. 6A, the pressure is slightly greater at the edges of the wheel than at the center of the wheel, but is substantially constant across the major portion of the width of the wheel. In FIG. 6B, the wheel 44B has a curved outer surface as shown in this Figure. When engaging print media supported by a flat backing substrate 24B, the resulting pressure distribution across the line of engagement of the wheel to the media is shown as 70B. As can be seen in Figure 6B, the pressure falls off more gradually from the center most portion of the wheel to the respective edges of the wheel than in the Figure 6A example. FIG. 6C illustrates the pressure distribution achieved by a wheel 44C of substantially rectangular cross-section when this wheel is applied to a curved drum-type backing substrate 24C. As shown at 70C, the resulting pressure distribution is somewhat between that shown at 70A and 70B. In general, although the pressure wheels, the backing substrate or both may be varied in shape and composition to adjust the pressure distribution, a distribution of the type shown in FIG. 6C has proven highly satisfactory. With this configuration, the edge portion of the wheel which first engages dots projecting from the media applies less pressure to these dots than applied by the center most portion of the wheel. Consequently, during multiple overlapping passes of a wheel across sections of print media, striping or banding of the image, resulting from impressions left by the print wheel on the deposited ink, has not been observed. In addition, each area of media printed with phase-change ink is subjected to sufficient pressure to accomplish fixing or fusing of the image. The print wheel may be supported to apply pressure in only one direction of travel across the media. However, bi-directional pressure application, that is the application of pressure as the wheel travels in both directions across the surface of the media has been successfully demonstrated. Thus, the entire image may be treated with pressure applicating wheels of this invention without leaving visible impressions on the image from the individual passes of the wheel across the image.

FIG. 3 illustrates this principle of operation of the FIG. 1 form of the invention in greater detail. That is, FIG. 3 illustrates a pressure distribution curve 70D which is similar to curve 70C in FIG. 6C. As a section 76 of print media 22 is first engaged by the pressure wheel 44, a relatively low line pressure is initially applied as indicated by location 76 in FIG. 3. As the print media is advanced one step at a time, at the next pass of the pressure wheel across the media, indicated by 76', a greater amount of line pressure is applied to the print media. Similarly, relatively high pressure is applied during the next pass of the wheel, as indicated by 76''. Finally, the pressure is reduced during the final pass of the wheel, as indicated at 76'''. Although a single pass wheel arrangement may be used, a multiple pass sequence has been observed to provide a uniform treatment of the image.

Referring again to FIG. 1, the pressure wheel 44 is shown mounted for rotation about an axis which is generally parallel to the direction in which the print media is advanced and which is also generally perpendicular to the direction of shuttling of the print head 14. Thus, the print wheel 44 rolls freely across the surface of the print media without wrinkling the print media during the fixing or fusing operation. Of course, other orientations of the wheel are also possible. For example, plural wheels may be provided, each with a separate mount, with the wheels being oriented to rotate about an axis which is substantially orthogonal to the direction of advancement of the print media. These plural wheels may be supported at a fixed location which the pressure application surface of these wheels engaging the media along paths or swaths which overlap such that the combination of all of the wheels would treat the entire sheet of print media. One such plural wheel arrangement is illustrated in FIG. 7. Of course, the FIG. 7 design, having four wheels 44, 44', 44'' and 44''', may also be mounted such that the wheels rotate about axes oriented in the same manner as the axis of rotation of wheel 44 in FIG. 1. In addition, plural wheels may be mounted to the shuttling portion of the ink jet print head or otherwise moved across the print media surface.

With reference to FIG. 4, print media 22 is shown backed up by a flat substrate or plate 80. Plural ink dots or spots 29 - 35 are shown deposited on this print media. In the FIG. 4 example, the pressure applicator mechanism 40 is shown in a position spaced from the ink jet print head 14. For example, the pressure applicator 40 may be carried by a support 82 which has a mechanism operable independently of the shuttling mechanism for the print head 14 for moving the pressure applicator wheel 44 across the surface of the print media. Alternatively, the support 82 may be coupled, as by a bar 84, indicated by dash lines in FIG. 4, to the print head or print head shuttling mechanism for moving the pressure applicator as the print head is moved. In a conventional manner, in FIG. 4 pairs of drive rollers 86, 88 and 90, 92, are provided to drive the media in a manner causing a bulge 94 to form in the media. This bulge 94 affectively isolates the printing zone where ink drops are printed by ink jet print head 14 from the zone at which pressure is applied by the pressure wheel 44.

In addition, as is shown in FIG. 5, the spacing between the media support and the pressure wheel 44 may be increased at the side margins of the support. For example, the side margins of the media supporting drum may be of progressively reduced diameter, as indicated by number 100 in FIG. 5, in comparison to the diameter at the central media supporting portion of the drum. In this case, as the pressure applicator wheel 44 reaches the reduced diameter portion of the drum, the spring 58 (FIG. 2) pushes the block 50 and pressure applicator 44 toward the drum surface with the maximum outward position of the pressure wheel being limited by the retaining element 64. Eventually, e.g. at location 102 in FIG. 5, the pressure wheel 44 is lifted from the drum surface. At this time, the drum is advanced to position fresh print media in position for printing by the ink jet print head. As the ink jet print head travels in the reverse direction, the pressure wheel 44 again engages the drum and print media to apply pressure to ink spots on the print media. Of course, other mechanisms are also suitable, such as shown in FIG. 4, for permitting movement of the print media without interference by the pressure fusing applicator of the present invention.

The apparatus of the present invention would be usable to process media of varying widths and thicknesses. For example, envelopes, paper ranging in weight from onion skin to 80 lb. stock and higher, drafting vellum, transparency film and other media printed with hot-melt ink may all be treated using the apparatus of the present invention. To enhance the ability to achieve uniform results on media of different thicknesses, the loading spring is selected to have a low spring note.

When pressure is applied to ink drops by the fusing apparatus of the present invention, the drops tend to spread on the media. An increase in area covered by the dots of about 100 percent on transparencies is one specific illustration of the spreading of drops which is achievable by the present invention.

Having illustrated and described the principles of our invention with reference to several preferred embodiments, it should be apparent to those skilled in the art that this invention may be modified in arrangement and detail without departing from such principles.

## Claims

1. An apparatus for applying pressure to image forming material (30, 32, 34) on print media (22) as the print media (22) and apparatus move relative to one another comprising a pressure applicator (40) having a pressure application surface (46); a support (24) which mounts and positions the pressure application surface (46) against the imaging forming material (30, 32, 34) on the print media (22) as the print media (22) and pressure application surface (46) move relative to one another; the pressure application surface (46) being configured to contact the media (22) along a line which is no longer than about one inch.

2. An apparatus according to Claim 1 in which the pressure applicator (40) comprises a pressure wheel (44) rotatably mounted to the support (24), the pressure wheel (44) having a width which is no greater than about one inch, whereby as the pressure applicator (46) rotates, a line of contact along the width of the pressure applicator (46) is made between the pressure application surface (42) and print media (22).

3. An apparatus for applying pressure to spots (30, 32, 34) of ink deposited on print media (22) by an ink jet print head (14) of a printer, the print head (14) being of the type which moves relative to the media (22) during printing, the apparatus comprising a pressure applicator (40) having a pressure application surface (42); a pressure applicator mount (42) coupled to the print head (14) for movement relative to the media (22), the mount (42) supporting the pressure applicator (40) with the pressure application surface (46) engaging the deposited ink spots (30, 32, 34) on the media (22) so as to apply pressure to the deposited ink spots (30, 32, 34) with the relative movement of the print head (14).

4. An apparatus according the Claim 3 in which the pressure applicator (40) comprises a wheel (44) having an external pressure application surface (46), the mount (42) rotatably coupling the wheel (44) to the print head (14) for rotation about a first axis.

5. An apparatus according to Claim 4 in which the media (22) is advanced generally in a first direction, the axis of the wheel (44) being oriented in a direction which is skewed with respect to the first direction.

6. An apparatus according to Claim 5 in which the axis of the wheel (44) is oriented in a direction which is orthogonal to the first direction.

7. An apparatus according to any one of Claims 4 to 6 in which the wheel (44) has a pressure application surface (46) which is moved with the print head (14) plural times across the portions of the media (22) having ink spots (30, 32, 34).

8. An apparatus according to Claim 7 in which the wheel (44) moves from two or four times over each section of the media (22).

9. An apparatus according to any one of Claims 4 to 8 in which the wheel (44) has first and second ends which form the boundaries of the pressure application surface (46), the pressure application surface providing a pressure distribution which increases moving inwardly from the ends of the pressure wheel (44).

10. An apparatus according to any one of Claims 4 to 9 in which there are plural pressure applicator wheels (44, 44″ and 44‴), each supported by a mount (52) for applying pressure to deposited spots (30, 32, 34) of ink on the media (22).

11. A printer apparatus of the type having an ink jet print head (14) for depositing spots (30, 32, 34) of ink on print media (22), the media (22) being advanced in use generally in a first direction relative to the ink jet print head (14), the apparatus comprising a support (42) and a pressure wheel (44) rotatably mounted to the support (42) with an axis of rotation generally parallel to the first direction, the pressure wheel (44) having an exposed pressure application surface (46), means for moving the support (42) and thereby the pressure wheel (44) back and forth across the media (22) in a second direction which is skewed with respect to the first direction, the support (42) comprising means for positioning the pressure wheel (44) against the deposited spots (30, 32, 34) of ink so as to apply pressure to such spots (30, 32, 34).

12. An apparatus according to Claim 11 in which the second direction is orthogonal to the first direction.

13. A printer apparatus of the type having an ink jet print head (14) for depositing spots (30, 32, 34) of ink on print media (22), the printer apparatus including an apparatus (40) for applying pressure to the deposited spots (30, 32, 34) of ink on the print media (22) comprising at least one wheel (44) with an external pressure application surface (46), the pressure application surface (46) being of a width which is substantially less than the width of the print media (22); the printer including a mount (42) for supporting the wheel (44) for rotation about an axis with the pressure application surface (46) in contact with the deposited spots (30, 32, 34) so as to apply pressure to such spots (30, 32, 34).

14. An apparatus according to Claim 13 in which the printer includes means for moving the mount (42) and thereby the wheel (44) relative to the print media (22) so as to apply pressure to the deposited ink spots (30, 32, 34) as the wheel (44) moves.

15. An apparatus as claimed in any preceding claim in which the pressure application surface (46) is approximately about one-fourth of an inch wide.

16. An apparatus according to any preceding claim in which the pressure applicator (40) comprises plural pressure wheels.

17. An apparatus according to any preceding claim in which the pressure application surface (46) is configured to apply a pressure which is at a higher level at locations inwardly from the side margins of the pressure application surface.

18. An apparatus according to any preceding claim in which the pressure application surface (46) is loaded with approximately at least about a twenty-five pound force.

19. An apparatus according to any preceding claim in which the printer includes a substrate with first and second side edges for supporting the media (22), a pressure wheel acting as said pressure applicator (40) being moved in a direction generally between the first and second side edges, the distance between the substrate and the axis of rotation of the wheel (44) increasing at the first and second side edges.

20. Image-forming material treatment apparatus wherein image-forming material depositions (30, 32, 34) carried on a sheet-form print medium (22) are in use subjected to pressure in an image-fixing, image-fusing or image-development process, the apparatus comprising print medium support means (24) for supporting the print medium (22) during pressure application, at least one pressure applicator (40) provided with a pressure application surface (46) and means for transmitting pressure to said print medium (22) through the agency of said pressure application surface (46) of each said pressure applicator (40) in a band traversing the print width of the print medium (22), characterized in that said pressure application surface (46) of the or each said pressure applicator (40) is configured so that instantaneous contact with the print medium (22) produces a contact region in said band, said contact region having its largest dimension equal to about 25mm or less.

21. A printer comprising image-forming treatment apparatus as claimed in Claim 20.

22. Image-forming apparatus comprising image-forming material pressure treatment means (40) and wherein image-forming material depositions (30, 32, 34) carried on a sheet-form print medium (22) are in use subjected to pressure in an image-fixing, image-fusing or image-development process, the apparatus including a printing head (14) disposed for reciprocational displacement across the width of the print medium for sequentially depositing said image-forming material depositions (30, 32, 34), print medium support means (24) for supporting the print medium (22) during pressure application, the pressure treatment means comprising at least one pressure applicator (40) provided with a pressure application surface (46) and the apparatus including means for transmitting pressure to said print medium (22) through the agency of said pressure application surface (46) of each said pressure applicator (40) in a print band traversing the print width of the print medium (22), characterised in that said pressure application surface (46) of the or each said pressure applicator (40) is configured so that instantaneous contact with the print medium (22) produces a contact region in said print band, and in that each said pressure applicator (40) is mounted in the apparatus for pressure-transmitting traversal of the print band of said print medium (22) with reciprocation of the printing head (14).

23. A method of image-fixing, image-fusion or image-development wherein image-forming material depositions (30, 32, 34) carried on a sheet-form print medium (22) are subjected to pressure by bringing a pressure application surface (42) into contact with said print medium (22) and causing said application surface to scan a band of said print medium (22) traversing the print width thereof in pressure-transmitting contact with said medium so as to subject depositions of said image-forming material in said band to said pressure.

24. A method of image-fixing, image-fusion or image-development wherein image-forming material depositions (30, 32, 34) carried on a sheet-form print medium (22) are subjected to pressure by bringing a plurality of pressure application surfaces (46) defined by respective pressure applicator means (42) into contact with said print medium (22), the pressure application surfaces (46) collectively transmitting pressure to all of the print medium (22) in a band traversing the print width of said print medium (22) so as to subject depositions (30, 32, 34) of said image-forming material in said band to said pressure, pressure being distributed to said pressure applicator means (42) by pressure generator means and each said pressure applicator means (42) being pressure-wise isolated from at least some of the other pressure applicator means (42).

25. A method as claimed in Claim 23 or Claim 24 wherein said image-forming material depositions are of phase-change ink.

*FIG.1*

*FIG.2*

*FIG.3*

*FIG.4*

FIG.5

FIG.6

FIG.7